# EUROPEAN PATENT SPECIFICATION

(11) **EP 1 863 873 B1**
(45) Date of publication and mention of the grant of the patent: **17.05.2017**
(21) Application number: 06737532.9
(22) Date of filing: 09.03.2006
(51) Int. Cl.: C08L 23/02, C08L 43/04, C08K 5/00, C08F 30/08

(54) **MOISTURE CROSSLINKABLE POLYMERIC COMPOSITION HAVING IMPROVED HEAT AGING PERFORMANCE**
VERNETZBARE FEUCHTIGKEITSPOLYMERZUSAMMENSETZUNG MIT ERHÖHTER WÄRMEALTERUNGSLEISTUNG
COMPOSITION POLYMERE RETICULABLE A L'HUMIDITE- PERFORMANCE DE VIEILLISSEMENT A LA CHALEUR AMELIOREE

(30) Priority: 18.03.2005 US 663133 P
(43) Date of publication of application: 12.12.2007
(73) Proprietor: Dow Global Technologies LLC, Midland, MI 48674 (US)
(72) Inventor: BISCOGLIO, Michael, B., Piscataway, New Jersey 08854 (US); ESSEGHIR, Mohamed, Monroe Township, New Jersey 08831 (US); DEVLIN, Kenneth, T., Bear, Delaware 19701 (US); WRIGHT, David, P., Evanston, IL 60201 (US); GAU, Yimsan, Belle Mead, New Jersey 08502 (US); SHUROTT, Salvatore, P., Freehold, New Jersey 07728 (US); MEHALICK, Joseph, Manville, New Jersey 08835 (US)
(74) Representative: Boult Wade Tennant
(86) International application number: PCT/US2006/008368
(87) International publication number: WO 2006/101754

(56) References cited:
- WO-A-2005/003199
- US-A1- 2005 049 335
- US-B1- 6 197 864
- US-B1- 6 232 376

## Description

This invention relates to a moisture-crosslinkable polymeric composition. The polymeric composition is particularly useful as an insulation layer for low to high voltage wire-and-cable applications.

WO-A-2005/003199 discloses a moisture crosslinkable polymeric composition comprising: (a) a silane functionalized olefinic polymer; (b) an acidic silanol condensation catalyst; and (c) an antioxidant not having a tertiary alkyl-substituted aryl or phenolic group.

US-B-6,197,864 discloses a flame retardant composition suitable for insulating wire and cable products comprised of ethylene - alkoxy silane copolymer, halogenated organic compound, antimony trioxide, silane condensation catalyst and magnesium hydroxide. Antioxidants can also be included in the compositions.

US-A-2005/0049335 discloses moisture curable flame retardant insulation compositions comprising an ethylene-silane copolymer, high density polyethylene resin, halogenated flame retardant, silanol condensation catalyst and stabiliser combination consisting of a zinc mercaptobenzimidazole and aromatic secondary amine.

US-B-6,232,376 discloses a moisture curable polyolefin composition comprising a polyolefin, an unsaturated alkoxy silane, an organic peroxiode, a silanol condensation catalyst, a hindered amine stabilizer, a hindered phenol antioxidant, and an arylamine antioxidant.

The use of acidic silanol condensation catalysts enhances the cure rates of moisture-crosslinkable polymeric compositions. However, the acidic catalysts also promote the decomposition of olefinic polymers. Therefore, these acid-containing polymeric compositions have required the use of antioxidants at very high concentrations to achieve heat stabilization.

Accordingly, there is a need to provide an antioxidant system that reduces the amount of antioxidants used. It is desirable to achieve this reduction by identifying high performance antioxidants or synergistic blends of antioxidants.
There is a further need for the improvement to not affect adversely (a) the catalytic performance of the acidic silanol condensation catalyst or (b) the generation of foul-smelling or combustible gases.

In a first embodiment, the invented moisture-crosslinkable polymeric composition comprises (a) a silane-functionalized polyolefin polymer selected from the group consisting of silane functionalized polyethylene polymers, silane functionalized polypropylene polymers, and blends thereof; (b) an acidic silanol condensation catalyst selected from the group consisting of organic sulfonic acids and hydrolyzable precursors thereof, organic phosphonic acids and hydrolyzable precursors thereof and halogen acids; and (c) an antioxidant, being a secondary amine substituted with two aromatic groups.

Suitable silane-functionalized olefinic polymers include silane-functionalized polyethylene polymers, silane-functionalized polypropylene polymers, and blends thereof. Preferably, the silane-functionalized olefinic polymer is selected from the group consisting of (i) a copolymer of ethylene and a hydrolyzable silane, (ii) a copolymer of ethylene, a hydrolyzable silane, and one or more C3 or higher alpha-olefins and unsaturated esters, (iii) a homopolymer of ethylene, having a hydrolyzable silane grafted to its backbone, and (iv) a copolymer of ethylene and one or more C3 or higher alpha-olefins and unsaturated esters, having a hydrolyzable silane grafted to its backbone.

Polyethylene polymer, as that term is used herein, is a homopolymer of ethylene or a copolymer of ethylene and a minor proportion of one or more alpha-olefins having 3 to 12 carbon atoms, and preferably 4 to 8 carbon atoms, and, optionally, a diene, or a mixture or blend of such homopolymers and copolymers. The mixture can be a mechanical blend or an in situ blend. Examples of the alpha-olefins are propylene, 1-butene, 1-hexene, 4-methyl-1-pentene, and 1-octene. The polyethylene can also be a copolymer of ethylene and an unsaturated ester such as a vinyl ester (e.g., vinyl acetate or an acrylic or methacrylic acid ester).

The polyethylene can be homogeneous or heterogeneous. The homogeneous polyethylenes usually have a polydispersity (Mw/Mn) in the range of about 1.5 to about 3.5 and an essentially uniform comonomer distribution, and are characterized by a single and relatively low melting point as measured by a differential scanning calorimeter. The heterogeneous polyethylenes usually have a polydispersity (Mw/Mn) greater than 3.5 and lack a uniform comonomer distribution. Mw is defined as weight average molecular weight, and Mn is defined as number average molecular weight.

The polyethylenes can have a density in the range of 0.860 to 0.970 gram per cubic centimeter, and preferably have a density in the range of 0.870 to about 0.930 gram per cubic centimeter. They also can have a melt index in the range of about 0.1 to about 50 grams per 10 minutes. If the polyethylene is a homopolymer, its melt index is preferably in the range of about 0.75 to about 3 grams per 10 minutes. Melt index is determined under ASTM D-1238, Condition E and measured at 190 degrees Celsius and 2160 grams.

Low- or high-pressure processes can produce the polyethylenes. They can be produced in gas phase processes or in liquid phase processes (i.e., solution or slurry processes) by conventional techniques. Low-pressure processes are typically run at pressures below 1000 pounds per square inch ("psi") whereas high-pressure processes are typically run at pressures above 15,000 psi.

Typical catalyst systems for preparing these polyethylenes include magnesium/titanium-based catalyst systems, vanadium-based catalyst systems, chromium-based catalyst systems, metallocene catalyst systems, and other transition metal catalyst systems. Many of these catalyst systems are often referred to as Ziegler-Natta catalyst systems or Phillips catalyst systems. Useful catalyst systems include catalysts using chromium or molybdenum oxides on silica-alumina supports.

Useful polyethylenes include low density homopolymers of ethylene made by high pressure processes (HP-LDPEs), linear low density polyethylenes (LLDPEs), very low density polyethylenes (VLDPEs), ultra low density polyethylenes (ULDPEs), medium density polyethylenes (MDPEs), high density polyethylene (HDPE), and metallocene copolymers.

High-pressure processes are typically free radical initiated polymerizations and conducted in a tubular reactor or a stirred autoclave. In the tubular reactor, the pressure is within the range of about 25,000 to about 45,000 psi and the temperature is in the range of about 200 degrees Celsius to about 350 degrees Celsius. In the stirred autoclave, the pressure is in the range of about 10,000 to 30,000 psi and the temperature is in the range of about 175 degrees Celsius to about 250 degrees Celsius.

Copolymers comprised of ethylene and unsaturated esters are well known and can be prepared by conventional high-pressure techniques. The unsaturated esters can be alkyl acrylates, alkyl methacrylates, or vinyl carboxylates. The alkyl groups can have 1 to 8 carbon atoms and preferably have 1 to 4 carbon atoms. The carboxylate groups can have 2 to 8 carbon atoms and preferably have 2 to 5 carbon atoms. The portion of the copolymer attributed to the ester comonomer can be in the range of about 5 to about 50 percent by weight based on the weight of the copolymer, and is preferably in the range of about 15 to about 40 percent by weight. Examples of the acrylates and methacrylates are ethyl acrylate, methyl acrylate, methyl methacrylate, t-butyl acrylate, n-butyl acrylate, n-butyl methacrylate, and 2-ethylhexyl acrylate. Examples of the vinyl carboxylates are vinyl acetate, vinyl propionate, and vinyl butanoate. The melt index of the ethylene/unsaturated ester copolymers can be in the range of about 0.5 to about 50 grams per 10 minutes, and is preferably in the range of about 2 to about 25 grams per 10 minutes.

Copolymers of ethylene and vinyl silanes may also be used. Examples of suitable silanes are vinyltrimethoxysilane and vinyltriethoxysilane. Such polymers are typically made using a high-pressure process. Use of such ethylene vinylsilane copolymers is desirable when a moisture crosslinkable composition is desired.

The VLDPE or ULDPE can be a copolymer of ethylene and one or more alpha-olefins having 3 to 12 carbon atoms and preferably 3 to 8 carbon atoms. The density of the VLDPE or ULDPE can be in the range of 0.870 to 0.915 gram per cubic centimeter. The melt index of the VLDPE or ULDPE can be in the range of about 0.1 to about 20 grams per 10 minutes and is preferably in the range of about 0.3 to about 5 grams per 10 minutes. The portion of the VLDPE or ULDPE attributed to the comonomer(s), other than ethylene, can be in the range of about 1 to about 49 percent by weight based on the weight of the copolymer and is preferably in the range of about 15 to about 40 percent by weight.

A third comonomer can be included, e.g., another alpha-olefin or a diene such as ethylidene norbornene, butadiene, 1,4-hexadiene, or a dicyclopentadiene. Ethylene/propylene copolymers are generally referred to as EPRs and ethylene/propylene/diene terpolymers are generally referred to as an EPDM. The third comonomer can be present in an amount of about 1 to 15 percent by weight based on the weight of the copolymer and is preferably present in an amount of about 1 to about 10 percent by weight. It is preferred that the copolymer contains two or three comonomers inclusive of ethylene.

The LLDPE can include VLDPE, ULDPE, and MDPE, which are also linear, but, generally, has a density in the range of 0.916 to 0.925 gram per cubic centimeter. It can be a copolymer of ethylene and one or more alpha-olefins having 3 to 12 carbon atoms, and preferably 3 to 8 carbon atoms. The melt index can be in the range of about 1 to about 20 grams per 10 minutes, and is preferably in the range of about 3 to about 8 grams per 10 minutes.

Any polypropylene may be used in these compositions. Examples include homopolymers of propylene, copolymers of propylene and other olefins, and terpolymers of propylene, ethylene, and dienes (e.g. norbornadiene and decadiene). Additionally, the polypropylenes may be dispersed or blended with other polymers such as EPR or EPDM. Suitable polypropylenes include TPEs, TPOs and TPVs. Examples of polypropylenes are described in POLYPROPYLENE HANDBOOK: POLYMERIZATION, CHARACTERIZATION, PROPERTIES, PROCESSING, APPLICATIONS 3-14,113-176 (E. Moore, Jr. ed., 1996).

Vinyl alkoxysilanes (e.g., vinyltrimethoxysilane and vinyltriethoxysilane) are suitable silane compound for grafting or copolymerization to form the silane-functionalized olefinic polymer.

Suitable acidic silanol condensation catalysts include (a) organic sulfonic acids and hydrolyzable precursors thereof, (b) organic phosphonic acids and hydrolyzable precursors thereof, and (c) halogen acids. Preferably, the acidic silanol condensation catalyst is an organic sulfonic acid. More preferably, the acidic silanol condensation catalyst is selected from the group consisting of alkylaryl sulfonic acids, arylalkyl sulfonic acids, and alkylated aryl disulfonic acids. Even more preferably, the acidic silanol condensation catalyst is selected from the group consisting of substituted benzene sulfonic acids and substituted naphthalene sulfonic acid. Most preferably, the acidic silanol condensation catalyst is dodecylbenzyl sulfonic acid or dinonylnapthyl sulfonic acid.

Suitable secondary amine antioxidant substituted with two aromatic groups include 4,4'-bis (alpha, alpha - dimethylbenzyl) diphenylamine, phenyl-a-naphthylamine, other diaryl amines, and diaryl sulfonamides. Preferably, the substituted aromatic groups will be benzyl groups or naphthyl groups.

Preferably, the acid silanol condensation catalyst achieves about the same catalytic performance as achievable in the absence of the secondary amine antioxidant. Also, preferably, the silane-functionalized olefinic polymer is curable at about the same rate as achievable in the absence of the secondary amine antioxidant.

In addition, the composition may contain other additives such as colorants, corrosion inhibitors, lubricants, anti-blocking agents, flame retardants, processing aids, and a second antioxidant, being a secondary amine substituted with one aromatic group. When a second antioxidant is present, it is present in an amount less than or equal to about 25 weight percent of the total amount of antioxidants. More preferably, it is present in an amount between about 1 weight percent and less than about 25 weight percent of the total amount of antioxidants. Even more preferably, it is present in amount between about 2.5 weight percent and 10 weight percent of the total amount of antioxidants.

In a second embodiment, the present invention is a moisture-crosslinkable polymeric composition comprising (a) a silane-functionalized polyolefin polymer selected from the group consisting of silane functionalized polyethylene polymers, silane functionalized polypropylene polymers, and blends thereof; (b) an acidic silanol condensation catalyst selected from the group consisting of organic sulfonic acids and hydrolyzable precursors thereof, organic phosphonic acids and hydrolyzable precursors thereof and halogen acids; (c) a first antioxidant; and (d) a second antioxidant, being a secondary amine substituted with at least one aromatic group.

With regard to this embodiment, the previously-described silane-functionalized olefinic polymer and acidic silanol condensation catalyst are suitable for the present embodiment. Additionally, the composition may contain other additives such as colorants, corrosion inhibitors, lubricants, anti-blocking agents, flame retardants, and processing aids.

Suitable first antioxidants include (a) phenolic antioxidants, (b) thio-based antioxidants, (c) phosphate-based antioxidants, and (d) hydrazine-based metal deactivators. Suitable phenolic antioxidants include methyl-substituted phenols. Other phenols, having substituents with primary or secondary carbonyls, are suitable antioxidants. A preferred phenolic antioxidant is isobutylidenebis(4,6-dimethylphenol). A preferred hydrazine-based metal deactivator is oxalyl bis(benzylidiene hydrazide). Preferably, the antioxidant is present in amount between about 0.05 weight percent to about 10 weight percent of the polymeric composition.

Suitable second antioxidants with at least one aromatic groups include 4,4'-bis (alpha, alpha - dimethylbenzyl) diphenylamine, phenyl-a-naphthylamine, other diaryl amines, diaryl sulfonamides, and polymerized 1,2-dihydro-2,2,4-trimethylquinoline. Preferably, the second antioxidant is present in an amount less than or equal to about 25 weight percent of the total amount of antioxidants. More preferably, it is present in an amount between about 1 weight percent and less than about 25 weight percent of the total amount of antioxidants. Even more preferably, it is present in amount between about 2.5 weight percent and 10 weight percent of the total amount of antioxidants.

Preferably, the acid silanol condensation catalyst achieves about the same catalytic performance as achievable in the absence of the second antioxidant. Also, preferably, the silane-functionalized olefinic polymer is curable at about the same rate as achievable in the absence of the second antioxidant.

In an alternate embodiment, the invention is wire or cable construction according to claim 7 and having an insulation layer wherein the insulation layer comprises the moisture crosslinkable polymeric composition of any one of Claims 1-6.

### EXAMPLES

The following non-limiting examples illustrate the invention.

### Test Methods

The following test methods were used to evaluate the non-limiting examples:

### (1) Hot Set

Hot set is a measurement of elongation according to IEC-60502-1. A test specimen fails the hot set test if the elongation is greater than 175 percent.

### (2) Heat Aging Performance

The tensile properties of strength and elongation are measured according to ASTM D638. Following one week of heat aging at 135 degrees Celsius, the tensile properties are again measured for the test specimens. It is desirable that the composition retain at least 75 percent of its original tensile properties in order to meet the IEC-60502-1 industrial specifications.

### (3) Lower Explosivity Limit (LEL)

For each exemplified polymeric composition, 50 grams of the composition were placed in a sealed 32-ounce jar, having a rubber septum in its lid. The jar and its contents were (a) maintained for 30 minutes at 25 degrees Celsius or (b) heated for 30 minutes at 180 degrees Celsius. After the jars were allowed to cool to room temperature, the septa were removed and an Eagle detection meter was placed inside the jar to measure the amount of generated gas.

An RKI Instruments Eagle Series Portable Multi-Gas Detector Meter was used to measure the gas generated. The meter was calibrated to detect methane on a scale of 0 to 100% LEL, corresponding to 0 to 50,000 parts per million (ppm) methane. The % LEL was reported using the methane-gas scale as representative for all detected gases.

### The Exemplified Compositions

A description of the components used to prepare the additive packages for the polymeric compositions follows. Each additive package was extruded at 5 weight percent loading into DFDB-5451 ethylene/silane copolymer over a copper conductor at a thickness of 30 mils. DFDB-5451 ethylene/silane copolymer, having a melt index of 1.50 grams/10 minutes and a density of 0.922 grams/cubic centimeter, was available from The Dow Chemical Company.

The coated wire specimens were used to evaluate the cure rate and heat aging performance of the compositions.
(1) DFH-2065 is a linear low density polyethylene, having a melt index of 0.65 grams/10 minutes and a density of 0.920 grams/cubic centimeter, and being available from The Dow Chemical Company.
(2) DPDA-6182 is an ethylene/ ethyl acrylate copolymer, having a melt index of 1.5 grams/10 minutes and a density of 0.930 grams/cubic centimeter, and being available from The Dow Chemical Company.
(3) Agerite MA polymerized 1,2-dihydro-2,2,4-trimethylquinoline is commercially available from R. T. Vanderbilt Company.
(4) Chimassorb 119™ 1,3,5-triazine-2,4,6-triamine,N,N"'-[1,2-ethane-diyl-bis[[ [4,6-bis-[butyl (1,2,2,6,6-pentamethyl-4-piperidinyl)amino]-1,3,5-triazine-2-yl]imino]-3,1-propanediyl]]bis[N',N"-dibutyl-N',N"-bis(1,2,2,6,6-pentamethyl-4-piperidinyl)- [CAS# 106990-43-6] is available from Ciba Specialty Chemicals Inc.
(5) Chimassorb 2020™ 1,6-hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine [CAS# 192268-64-7] is available from Ciba Specialty Chemicals Inc.
(6) Cyanox 1790™ tris(4-t-butyl-3-hydroxy-2,6-dimethylbenzyl)-s-triazine-2,4,6-(1H,3H,5H)trione is available from Cytec Industries.
(7) DSTDP is distearyl-3-3-thiodiproprionate available from Great Lakes Chemical Corporation.
(8) Irganox 1010™ tetrakismethylene (3,5-di-t-butyl-4-hydroxylhydrocinnamate) methane is a hindered phenolic antioxidant, available from Ciba Specialty Chemicals Inc.
(9) Irganox 1024™1,2-bis(3,5-di-t-butyl-4-hydroxyhydrocinnamoyl)hydrazine is available from Ciba Specialty Chemicals Inc.
(10) Lowinox 22IB46™ isobutylidene bis-(4,6-dimethylphenol) is an antioxidant available from Great Lakes Chemicals Corporation.
(11) NACURE™ B201 alkyl aromatic sulfonic acid is available from King Industries, Inc.
(12) Naugard 445 4,4'-bis (alpha, alpha - dimethylbenzyl) diphenylamine is available from Crompton Corporation.
(13) OABH is oxalyl bis (benzylidiene hydrazide), a metal deactivator available from Eastman Chemical Company.
(14) Super Q™ polymerized 1,2-dihydro-2,2,4-trimethylquinoline is available from Crompton Corporation.
(15) TBM6 is 4,4-thiobis(2-t-butyl-5-methylphenol) available from Great Lakes Chemical Corporation.

**Table I**

| Component | C. Ex. 1 | C. Ex. 2 | C. Ex. 3 | Ex. 4 | Ex. 5 | C. Ex. 6 | C. Ex. 7 | C. Ex. 8 | C. Ex. 9 | C. Ex. 10 | C. Ex. 11 | Ex. 12 | C. Ex. 13 | Ex. 14 |
|---|---|---|---|---|---|---|---|---|---|---|---|---|---|---|
| DFH-2065 | 46.00 | 46.00 | 46.00 | 46.00 | 46.00 | 46.00 | 45.50 | 45.00 | 46.00 | 46.40 | 46.165 | 46.015 | 46.14 | 46.015 |
| DPDA-6182 | 46.00 | 46.00 | 46.00 | 46.00 | 46.00 | 46.00 | 45.50 | 45.00 | 46.00 | 46.40 | 46.165 | 46.015 | 46.14 | 46.015 |
| Agerite MA | | | | | | | | | | | | 0.30 | 0.05 | |
| Chimassorb 119 | 4.00 | | | | | | | | | | | | | |
| Chimassorb 2020 | | 4.00 | | | | | | | | | | | | |
| Cyanox 1790 | | | | | 2.00 | 4.00 | | | | | | | | |
| DSTDP | | | | | | | | 3.00 | | | | | | |
| Irganox 1010 | | | | | | | 3.33 | 3.00 | 2.00 | | | | | |
| Irganox 1024 | | | | | | | 1.67 | | | | | | | |
| Lowinox 22IB46 | | | | | | | | | | 4.00 | 4.40 | 4.40 | 4.40 | 4.40 |
| NACURE™ B201 | 4.00 | 4.00 | 4.00 | 4.00 | 4.00 | 4.00 | 4.00 | 4.00 | 4.00 | 2.50 | 2.50 | 2.50 | 2.50 | 2.50 |
| Naugard 445 | | | | 2.00 | 2.00 | | | | | | | | | 0.30 |
| OABH | | | | | | | | | | 0.70 | 0.77 | 0.77 | 0.77 | 0.77 |
| Super Q | | | 4.00 | | | | | | | | | | | |
| TBM6 | | | | 2.00 | | | | | 2.00 | | | | | |

### Hot Set

Comparatives 1 - 3 and 6 and Examples 4 and 5 were maintained at a temperature of 23 degrees Celsius and a relative humidity of 70 percent for two days. Comparative Examples 1 - 3 failed to cure within two days. As such, those comparative examples were not evaluated for hot set. Examples 4 and 5 and Comparative Example 6 were evaluated for hot set after one and two days.

**Table II**

| % Elongation | Example 4 | Example 5 | Comp. Example 6 |
|---|---|---|---|
| Day 1 | 55.51 | 55.54 | 48.29 |
| Day 2 | 39.11 | 43.70 | 33.86 |

### Heat Aging Performance

Examples 4 and 5 and Comparative Examples 6 - 9 were evaluated for heat aging performance.

**Table III**

| % Retained Property | Ex. 4 | Ex. 5 | C. Ex. 6 | C. Ex. 7 | C. Ex. 8 | C. Ex. 9 |
|---|---|---|---|---|---|---|
| Tensile Strength | 114 | 127 | 54 | 22 | 28 | 33 |
| Tensile Elongation | 104 | 110 | 44 | 19 | 13 | 14 |

### Hot Set

Comparative Examples 10, 11, and 13 and Examples 12 and 14 were maintained at a temperature of 23 degrees Celsius and a relative humidity of 70 percent for three days. The hot set measurements were taken after one, two, and three days.

**Table IV**

| % Elongation | C. Ex. 10 | C. Ex. 11 | Ex. 12 | C. Ex. 13 | Ex. 14 |
|---|---|---|---|---|---|
| Day 1 | 121.8 | 112.6 | 115.2 | 131.0 | 121.8 |
| Day 2 | 73.2 | 75.9 | 81.1 | 81.1 | 79.8 |
| Day 3 | 57.5 | 54.9 | 71.9 | 54.9 | 57.5 |

### Heat Aging Performance

Comparative Examples 10, 11, and 13 and Examples 12 and 14 were evaluated for heat aging performance. The performance was measured after 5 days, 7 days, and 10 days of subjecting the test specimens to 135 degrees Celsius.

**Table V**

| % Retained Property | C. Ex. 10 | C. Ex. 11 | Ex. 12 | C. Ex. 13 | Ex. 14 |
|---|---|---|---|---|---|
| 5 days | | | | | |
| Tensile Strength | 103 | 109 | 85 | 86 | 113 |
| Tensile Elongation | 88 | 97 | 79 | 84 | 100 |

| 7 days | | | | | |
|---|---|---|---|---|---|
| Tensile Strength | 98 | 85 | 99 | 84 | 92 |
| Tensile Elongation | 87 | 85 | 81 | 83 | 92 |

| 10 days | | | | | |
|---|---|---|---|---|---|
| Tensile Strength | 30 | 36 | 91 | 36 | 99 |
| Tensile Elongation | 18 | 25 | 77 | 30 | 92 |

### Lower Explosivity Limit (LEL) for 50-Gram Samples

Examples and Comparative Examples were prepared with the described antioxidants, 4 weight percent of NACURE™ B201 alkyl aromatic sulfonic acid, and the balance of the composition being DFH-2065 and DPDA-6182 in a 1:1 ratio.

**TABLE VI**

| Ex. No. | Antioxidant | Weight Percent | % LEL | |
|---|---|---|---|---|
| | | | 25 degrees C | 180 degrees C |
| C. Ex. 15 | None | | 2 | 11 |
| C. Ex. 16 | Irganox 1010 | 3.33 | 2 | 100 |
| C. Ex. 17 | Irganox 1024 | 1.67 | 2 | 50 |
| Ex. 18 | Naugard 445 | 3.33 | 2 | 7 |
| Ex. 19 | Naugard 445 | 3.33 | 2 | 18 |
| | Irganox 1024 | 1.67 | | |

## Claims

1. A moisture crosslinkable polymeric composition comprising:
a. a silane-functionalized polyolefin polymer selected from the group consisting of silane functionalized polyethylene polymers, silane functionalized polypropylene polymers, and blends thereof;
b. an acidic silanol condensation catalyst selected from the group consisting of organic sulfonic acids and hydrolyzable precursors thereof, organic phosphonic acids and hydrolyzable precursors thereof and halogen acids; and
c. an antioxidant, being a secondary amine substituted with two aromatic groups.

2. The moisture crosslinkable polymeric composition of Claim 1 further comprising a second antioxidant, being a secondary amine substituted with one aromatic group.

3. A moisture crosslinkable polymeric composition comprising:
a. a silane-functionalized polyolefin polymer selected from the group consisting of silane functionalized polyethylene polymers, silane functionalized polypropylene polymers, and blends thereof;
b. an acidic silanol condensation catalyst selected from the group consisting of organic sulfonic acids and hydrolyzable precursors thereof, organic phosphonic acids and hydrolyzable precursors thereof and halogen acids;
c. a first antioxidant; and
d. a second antioxidant, being a secondary amine substituted with at least one aromatic group.

4. The moisture crosslinkable polymeric composition of Claim 3 wherein the first antioxidant is selected from the group consisting of (ai) phenolic antioxidants, (bi) thio-based antioxidants, (ci) phosphate-based antioxidants, and (di) hydrazine-based metal deactivators.

5. The moisture crosslinkable polymeric composition of Claim 2 or 3 wherein the second antioxidant being present in amount less than or equal to about 25 weight percent of the total amount of antioxidants.

6. The moisture crosslinkable polymeric composition of any one of claims 1 to 5 wherein the silane functionalized polyolefin polymer is selected from the group consisting of (a) a copolymer of ethylene and a hydrolyzable silane, (b) a copolymer of ethylene, a hydrolyzable silane, and one or more C3 or higher alpha-olefins and unsaturated esters, (c) a homopolymer of ethylene, having a hydrolyzable silane grafted to its backbone, and (d) a copolymer of ethylene and one or more C3 or higher alpha-olefins and unsaturated esters, having a hydrolycable silane grafted to its backbone.

7. A wire or cable construction having an insulation layer wherein the insulation layer comprises the moisture crosslinkable polymeric composition of any one of Claims 1 - 6.

## Patentansprüche

1. Eine durch Feuchtigkeit vernetzbare Polymerzusammensetzung, die Folgendes beinhaltet:
a. ein silanfunktionalisiertes Polyolefinpolymer, ausgewählt aus der Gruppe, bestehend aus silanfunktionalisierten Polyethylenpolymeren, silanfunktionalisierten Polypropylenpolymeren und Mischungen davon;
b. einen sauren Silanolkondensationskatalysator, ausgewählt aus der Gruppe, bestehend aus organischen Sulfonsäuren und hydrolysierbaren Präkursoren davon, organischen Phosphonsäuren und hydrolysierbaren Präkursoren davon und Halogensäuren; und
c. ein Antioxidationsmittel, welches ein sekundäres Amin, substituiert mit zwei aromatischen Gruppen, ist.

2. Durch Feuchtigkeit vernetzbare Polymerzusammensetzung gemäß Anspruch 1, ferner beinhaltend ein zweites Antioxidationsmittel, das ein sekundäres Amin, substituiert mit einer aromatischen Gruppe, ist.

3. Eine durch Feuchtigkeit vernetzbare Polymerzusammensetzung, die Folgendes beinhaltet:
a. ein silanfunktionalisiertes Polyolefinpolymer, ausgewählt aus der Gruppe, bestehend aus silanfunktionalisierten Polyethylenpolymeren, silanfunktionalisierten Polypropylenpolymeren und Mischungen davon;
b. einen sauren Silanolkondensationskatalysator, ausgewählt aus der Gruppe, bestehend aus organischen Sulfonsäuren und hydrolysierbaren Präkursoren davon, organischen Phosphonsäuren und hydrolysierbaren Präkursoren davon und Halogensäuren;
c. ein erstes Antioxidationsmittel; und
d. ein zweites Antioxidationsmittel, welches ein sekundäres Amin, substituiert mit mindestens einer aromatischen Gruppe, ist.

4. Durch Feuchtigkeit vernetzbare Polymerzusammensetzung gemäß Anspruch 3, wobei das erste Antioxidationsmittel aus der Gruppe ausgewählt ist, die aus Folgendem besteht: (ai) Phenolantioxidationsmitteln, (bi) thiobasierten Antioxidationsmitteln, (ci) phosphatbasierten Antioxidationsmitteln und (di) hydrazinbasierten Metalldesaktivatoren.

5. Durch Feuchtigkeit vernetzbare Polymerzusammensetzung gemäß Anspruch 2 oder 3, wobei das zweite Antioxidationsmittel in einer Menge von weniger als oder gleich etwa 25 Gewichtsprozent der Gesamtmenge an Antioxidationsmitteln vorhanden ist.

6. Durch Feuchtigkeit vernetzbare Polymerzusammensetzung gemäß einem der Ansprüche 1 bis 5, wobei das silanfunktionalisierte Polyolefinpolymer aus der Gruppe ausgewählt ist, die aus Folgendem besteht: (a) einem Copolymer von Ethylen und einem hydrolysierbaren Silan, (b) einem Copolymer von Ethylen, einem hydrolysierbaren Silan und einem oder mehreren alpha-Olefinen mit C3 oder mehr und ungesättigten Estern, (c) einem Homopolymer von Ethylen mit einem auf seine Hauptkette gepfropften hydrolysierbaren Silan und (d) einem Copolymer von Ethylen und einem oder mehreren alpha-Olefinen mit C3 oder mehr und ungesättigten Estern mit einem auf seine Hauptkette gepfropften hydrolysierbaren Silan.

7. Eine Draht- oder Kabelkonstruktion mit einer Isolierschicht, wobei die Isolierschicht die durch Feuchtigkeit vernetzbare Polymerzusammensetzung gemäß einem der Ansprüche 1-6 beinhaltet.

## Revendications

1. Une composition polymère réticulable à l'humidité comprenant :
a. un polymère de polyoléfine fonctionnalisé au silane sélectionné dans le groupe consistant en des polymères de polyéthylène fonctionnalisés au silane, des polymères de polypropylène fonctionnalisés au silane, et des mélanges homogènes de ceux-ci ;
b. un catalyseur de condensation de silanol acide sélectionné dans le groupe consistant en des acides sulfoniques organiques et des précurseurs hydrolysables de ceux-ci, des acides phosphoniques organiques et des précurseurs hydrolysables de ceux-ci et des acides halogénés ; et
c. un antioxydant, étant une amine secondaire substituée par deux groupes aromatiques.

2. La composition polymère réticulable à l'humidité de la revendication 1 comprenant en outre un second antioxydant, étant une amine secondaire substituée par un groupe aromatique.

3. Une composition polymère réticulable à l'humidité comprenant :
a. un polymère de polyoléfine fonctionnalisé au silane sélectionné dans le groupe consistant en des polymères de polyéthylène fonctionnalisés au silane, des polymères de polypropylène fonctionnalisés au silane, et des mélanges homogènes de ceux-ci ;
b. un catalyseur de condensation de silanol acide sélectionné dans le groupe consistant en des acides sulfoniques organiques et des précurseurs hydrolysables de ceux-ci, des acides phosphoniques organiques et des précurseurs hydrolysables de ceux-ci et des acides halogénés ;
c. un premier antioxydant ; et
d. un second antioxydant, étant une amine secondaire substituée par au moins un groupe aromatique.

4. La composition polymère réticulable à l'humidité de la revendication 3 dans laquelle le premier antioxydant est sélectionné dans le groupe consistant en (ai) des antioxydants phénoliques, (bi) des antioxydants à base de thio, (ci) des antioxydants à base de phosphate, et (di) des désactivateurs de métaux à base d'hydrazine.

5. La composition polymère réticulable à l'humidité de la revendication 2 ou 3 dans laquelle le second antioxydant est présent en une quantité inférieure ou égale à environ 25 pour cent en poids de la quantité totale d'antioxydants.

6. La composition polymère réticulable à l'humidité de n'importe laquelle des revendications 1 à 5 dans laquelle le polymère de polyoléfine fonctionnalisé au silane est sélectionné dans le groupe consistant en (a) un copolymère d'éthylène et d'un silane hydrolysable, (b) un copolymère d'éthylène, d'un silane hydrolysable, et d'un ou de plusieurs esters insaturés et alpha-oléfines en C3 ou plus, (c) un homopolymère d'éthylène, ayant un silane hydrolysable greffé sur son squelette, et (d) un copolymère d'éthylène et d'un ou de plusieurs esters insaturés et alpha-oléfines en C3 ou plus, ayant un silane hydrolysable greffé sur son squelette.

7. Une construction de câbles ou de fils métalliques possédant une couche d'isolation, la couche d'isolation comprenant la composition polymère réticulable à l'humidité de n'importe laquelle des revendications 1 à 6.
